# FASCICULE DE BREVET EUROPEEN

(11) **EP 3 113 067 B1**
(45) Date de publication et mention de la délivrance du brevet: **03.04.2019**
(21) Numéro de dépôt: 15190644.3
(22) Date de dépôt: 20.10.2015
(51) Int. Cl.: G06F 21/73

(54) **DÉTECTION D'AUTHENTICITÉ D'UN CIRCUIT ÉLECTRONIQUE OU D'UN PRODUIT CONTENANT UN TEL CIRCUIT**
ERKENNUNG DER AUTHENTIZITÄT EINES ELEKTRONISCHEN SCHALTKREISES ODER EINES PRODUKTS, DAS EINEN SOLCHEN SCHALTKREIS UMFASST
DETECTION OF THE AUTHENTICITY OF AN ELECTRONIC CIRCUIT OR A PRODUCT CONTAINING SUCH A CIRCUIT

(30) Priorité: 30.06.2015 FR 1556125
(43) Date de publication de la demande: 04.01.2017
(73) Titulaire: Proton World International N.V., 1831 Diegem (BE); STMICROELECTRONICS (ROUSSET) SAS, 13790 Rousset (FR)
(72) Inventeur: MODAVE, Jean-Louis, 1340 Ottignies (BE); MARINET, Fabrice, 13790 Chateauneuf le Rouge (FR); FARISON, Denis, 13100 Le Tholonet (FR)
(74) Mandataire: Cabinet Beaumont

(56) Documents cités:
- US-A1- 2008 309 396
- US-A1- 2013 133 031
- Michael Weiner ET AL: "A Low Area Probing Detector for Power Efficient Security ICs" In: "LECTURE NOTES IN COMPUTER SCIENCE", 3 juillet 2014 (2014-07-03), Springer Berlin Heidelberg, Berlin, Heidelberg, XP055211155, ISSN: 0302-9743 ISBN: 978-3-54-045234-8 vol. 8651, pages 185-197, DOI: 10.1007/978-3-319-13066-8_12, * abrégé * * Section "3 Related Work" *

## Description

### Domaine

La présente description concerne de façon générale les circuits électroniques et, plus particulièrement, un procédé de vérification de l'authenticité ou origine d'un produit (un accessoire ou un consommable) devant coopérer avec un dispositif.

### État de l'art antérieur

Dans de nombreux domaines, on cherche à garantir qu'un produit, par exemple une cartouche d'encre, une batterie, un accessoire, etc., devant être utilisé dans un dispositif, soit un produit d'origine ou authentique, c'est-à-dire approuvé par le fabricant du dispositif. Pour cela, une clé d'authentification est généralement stockée dans un circuit électronique associé à ce produit et sert, lorsque le produit est installé dans le dispositif ou lorsqu'il doit coopérer avec celui-ci, à vérifier qu'il s'agit d'un produit authentique. Toutefois, si le secret parvient à être percé et qu'un fabricant met en circulation des produits non approuvés par le fabricant du dispositif, mais équipés de circuits possédant la bonne clé, les dispositifs vont considérer ces produits comme authentiques.

Le document US2013/0133031-A1 divulgue une méthode de mesure de rétention de mémoire de type DRAM afin d'authentifier un circuit.

Le document XP55211155 divulgue une méthode de mesure du temps de décharge avec de détecter une attaque physique de type Probing.

### Résumé

Un mode de réalisation propose une solution palliant tout ou partie des inconvénients des techniques connues d'authentification de produit par circuit électronique.

Un mode de réalisation propose une solution particulièrement adaptée à des circuits qui ne sont pas alimentés en permanence.

Ainsi, un mode de réalisation prévoit un procédé de vérification de l'authenticité d'un produit associé à un dispositif hôte, dans lequel :
un premier circuit électronique du dispositif initialise un circuit de rétention de charges d'un deuxième circuit électronique du produit ; et
le premier circuit interprète une durée de décharge du circuit de rétention de charges pour décider de l'authenticité du produit.

Selon un mode de réalisation, le premier circuit compare une information représentative du temps, fournie par le circuit de rétention de charge à une durée attendue.

Selon un mode de réalisation, le premier circuit déclenche une évaluation de l'authenticité en coupant l'alimentation du deuxième circuit.

Selon un mode de réalisation, la durée de l'interruption de l'alimentation du deuxième circuit est aléatoire.

Selon un mode de réalisation :
le premier circuit communique au deuxième circuit une tension représentative d'un niveau de charges à stocker dans le circuit de rétention de charges ;
le deuxième circuit charge le circuit de rétention de charges ;
le premier circuit coupe l'alimentation du deuxième circuit pendant une certaine durée à l'issue de laquelle le deuxième circuit mesure la quantité de charges résiduelle dans le circuit de rétention de charges ;
le deuxième circuit communique une information représentative de cette quantité résiduelle au premier circuit ; et
le premier circuit compare cette information à une valeur attendue.

Selon un mode de réalisation :
le deuxième circuit reçoit une valeur temporelle pendant laquelle le deuxième circuit doit s'abstenir de répondre au premier circuit ;
le deuxième circuit charge le circuit de rétention de charges ;
le premier circuit coupe l'alimentation du deuxième circuit et initialise un compteur temporel ;
le premier circuit rallume le deuxième circuit et l'interroge périodiquement jusqu'à ce qu'il réponde ; et
dès que le deuxième circuit répond, le premier circuit compare la durée écoulée à une durée attendue, fonction des caractéristiques du circuit de rétention de charge du deuxième circuit.

Selon un mode de réalisation, ladite valeur temporelle est communiquée au deuxième circuit par le premier circuit.

Selon un mode de réalisation, ladite valeur temporelle est communiquée au premier circuit et au deuxième circuit par un troisième circuit.

Un mode de réalisation prévoit également un système comportant au moins un dispositif hôte et au moins un produit associé à ce dispositif hôte, adaptés au procédé décrit.

Selon un mode de réalisation, le dispositif est une imprimante et le produit est une cartouche d'encre.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un exemple de système du type auquel s'appliquent à titre d'exemple des modes de réalisation qui vont être décrits ;
la figure 2 illustre, par un schéma bloc, un mode de réalisation du procédé d'authentification ;
la figure 3 est un schéma électrique simplifié d'un exemple d'un circuit adapté à retenir des charges électriques de façon contrôlable pour une mesure temporelle ;
la figure 4 est un graphe illustrant le comportement d'un circuit de rétention de charges d'un circuit 22 par application du procédé d'authentification ;
la figure 5 est un schéma bloc d'un mode de réalisation du procédé d'authentification ; et
la figure 6 est un schéma bloc d'un autre mode de réalisation du procédé d'authentification.

### Description détaillée

De mêmes éléments ont été désignés par de mêmes références aux différentes figures.

Par souci de clarté, seules les étapes et éléments utiles à la compréhension des modes de réalisation qui vont être décrits ont été représentés et seront détaillés. En particulier, la génération des signaux échangés entre les circuits et leur interprétation côté terminal et côté transpondeur n'ont pas été détaillées, les modes de réalisation décrits étant compatibles avec les techniques usuelles de génération et d'interprétation de ces signaux. Dans la description qui suit, lorsqu'on fait référence aux termes approximativement, environ et, de l'ordre de, cela signifie à 10% près, de préférence à 5% près.

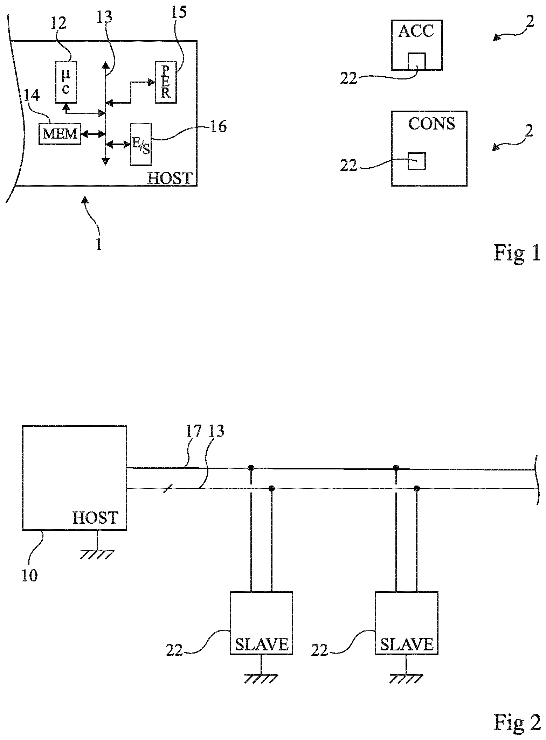

La figure 1 représente, de façon très schématique et sous forme de blocs, un exemple de système du type auquel s'appliquent les modes de réalisation qui vont être décrits. Un dispositif hôte 1 (HOST) est susceptible d'accueillir ou de fonctionner avec un ou plusieurs produits 2, accessoires (ACC) ou consommables (CONS). A titre d'exemple d'application particulier, le dispositif hôte est une imprimante et le produit (consommable) est une cartouche d'encre. Selon un autre exemple, il s'agit d'un système électronique (par exemple, une console de jeu, un téléphone mobile, etc.) utilisant des accessoires (par exemple des manettes de jeu, une oreillette, une coque, un étui, etc.). Plus généralement, il peut s'agir de tout type de système basé sur la coopération entre un dispositif principal (hôte) et un ou plusieurs accessoires ou consommables (produits).

Les fabricants de consommables ou d'accessoires cherchent généralement à se protéger contre l'utilisation d'accessoires pirates ou non authentiques pour, entre autres, garantir à leurs utilisateurs la qualité et la fiabilité des produits d'origine par rapport à des copies ou "clones". Un autre objectif est d'éviter les éventuelles contrefaçons. On fera par la suite référence à des copies pour désigner les produits non authentiques, qu'il s'agisse de copies serviles ou plus généralement de produits similaires susceptibles d'être utilisés en produits authentiques.

La protection consiste généralement en un mécanisme d'authentification d'un nouveau produit introduit dans le dispositif hôte, voire d'une authentification à chaque mise sous tension du dispositif, à chaque sortie de mode veille, ou à chaque utilisation du produit (par exemple, à chaque impression). En reprenant l'exemple d'une imprimante, l'imprimante et toutes les cartouches sont équipées d'un circuit électronique adapté à une telle authentification, par exemple un processeur cryptographique ou un programme exécuté par un processeur générique.

Par exemple, comme l'illustre la figure 1, le dispositif hôte 1 comporte un circuit de type microcontrôleur 12 (µC) susceptible de communiquer par un ou plusieurs bus 13 d'adresses, de commandes et de données, avec une ou plusieurs mémoires 14 (MEM), un ou plusieurs périphériques 15 (PER), par exemple les divers circuits du dispositif 1, et un ou plusieurs circuits 16 d'entrée-sortie (E/S) parmi lesquels un dispositif apte à communiquer avec les produits 2.

Un produit 2, qu'il s'agisse d'un consommable ou d'un accessoire, comporte au moins un circuit 22, de préférence sécurisé, par exemple de type microcontrôleur, comportant le même type de composants (non représentés) : un processeur, des mémoires volatiles et non volatiles, une interface d'entrée-sortie vers un bus de communication avec le dispositif 1, etc.

Dans les techniques usuelles, le dispositif 1 et les produits 2 partagent des clés d'authentification stockées en mémoire, sur lesquelles sont basées les procédures d'authentification.

Dans les modes de réalisation décrits ci-après, l'authentification ne s'effectue pas par échange de clés d'authentification stockées sous la forme de mots numériques, mais à partir de paramètres électriques intrinsèques au circuit électronique de la cartouche.

Plus précisément on prévoit d'exploiter une vitesse de décharge d'un élément de stockage de charges côté produit 2. On prévoit ainsi d'intervenir sur l'alimentation électrique des circuits électroniques 22 associés aux produits 2 pour déterminer leur authenticité.

La figure 2 illustre, par un schéma bloc, un mode de réalisation du procédé d'authentification.

Le circuit électronique du produit 1, symbolisé ici par un bloc 10 (HOST), contrôle les produits 2, plus précisément les circuits électroniques 22 des produits constituant des circuits esclave (SLAVE), non seulement par le biais d'un bus de communication 13, mais également en contrôlant leur alimentation, c'est-à-dire en commandant leur fourniture d'énergie, par exemple en fournissant un bus d'alimentation 17.

Chaque circuit esclave 22 comporte un circuit 3 adapté à retenir des charges électriques de façon contrôlable pour une mesure temporelle.

Des exemples de circuits de ce type sont décrits dans les brevets américains 8,963,574 ; 8,872,177 ; 8,331,203 ; 8,320,176 ; 8,036,020 ; 8,339,848.

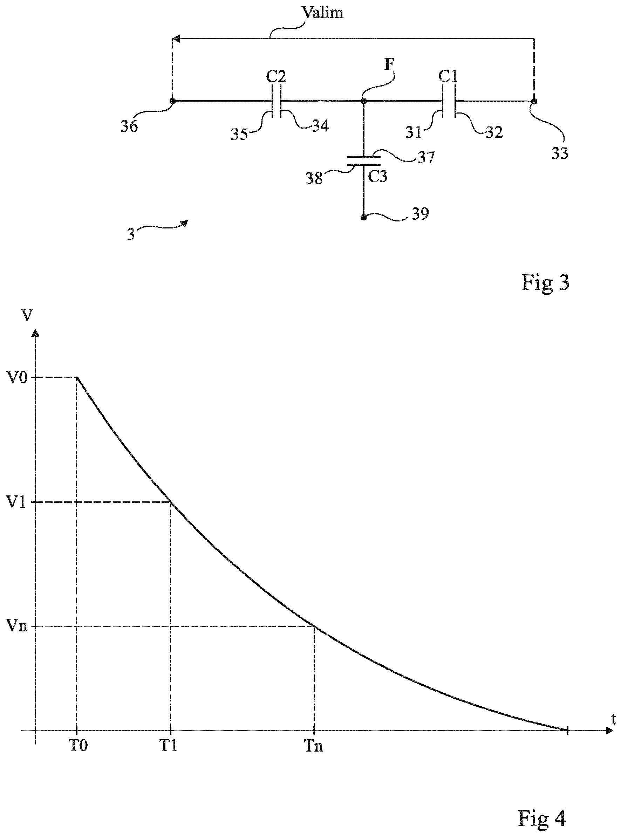

La figure 3 est un schéma électrique simplifié d'un exemple d'un circuit 3 adapté à retenir des charges électriques de façon contrôlable pour une mesure temporelle.

Le circuit 3 comprend un premier élément capacitif Cl dont une première électrode 31 est connectée à un noeud flottant F et dont une seconde électrode 32 est connectée à une borne 33 d'application d'un potentiel, et un second élément capacitif C2 dont une première électrode 34 est connectée au noeud F et dont une seconde électrode 35 est connectée à une borne 36 d'application d'un potentiel. Le circuit 3 comporte en outre un troisième élément capacitif C3 dont une première électrode 37 est connectée au noeud F et dont une seconde électrode 38 est connectée à une borne 39 d'application d'un potentiel, et dont l'espace diélectrique est conçu, par sa permittivité et/ou par son épaisseur, pour présenter des fuites non négligeables dans le temps. L'élément capacitif Cl présente une capacité de rétention de charges supérieure à celle de l'élément C3, et l'élément capacitif C2 présente une capacité de rétention de charges supérieure à celle de l'élément C3, mais inférieure à celle de l'élément Cl. Un rôle de l'élément capacitif Cl (élément de stockage) est de stocker des charges électriques. Un rôle de l'élément capacitif C3 (élément d'écoulement) est de décharger l'élément de stockage Cl, relativement lentement par rapport à une connexion directe de son électrode 31 à la masse. Un rôle de l'élément capacitif C2 est de permettre une injection de charges dans l'élément capacitif Cl, en évitant les contraintes (stress) qui résulteraient, pour l'élément d'écoulement C3, d'une charge directe de l'élément de stockage Cl par application d'une tension d'alimentation entre le noeud F et la borne 33.

Lors d'une étape d'initialisation d'une phase de rétention de charges, les bornes 33 et 39 sont à un potentiel de référence, par exemple la masse, et un potentiel d'alimentation haut (positif par rapport à la masse) Valim est appliqué sur la borne 36, ce qui entraîne la charge de l'élément capacitif Cl. En variante, pour charger l'élément Cl, la borne 39 peut être mise à la masse, et les bornes 36 et 33 à des potentiels respectivement positif et négatif par rapport à la masse. Lorsque la tension d'alimentation n'est plus appliquée entre les bornes 36 et 33, par exemple lorsque le circuit n'est plus alimenté, l'élément de stockage Cl se décharge de façon contrôlée (relativement lentement) à travers l'élément d'écoulement C3. On notera qu'une phase de décharge contrôlée peut aussi être prévue lorsque le circuit est encore alimenté. Lors de la phase de décharge, les bornes 33, 36 et 39 peuvent être laissées flottantes, ou mises à un même potentiel de référence, par exemple la masse. Lors d'une étape de lecture, après une phase de décharge, la charge résiduelle de l'élément de stockage Cl est mesurée (pour la mesure, le dispositif doit être alimenté). La charge résiduelle de l'élément Cl est considérée comme représentative du temps écoulé entre la fin de l'étape d'initialisation et l'étape de lecture.

On prévoit d'exploiter de tels circuits de rétention de charges électriques pour déterminer l'authenticité des produits 2.

Pour cela, à chaque besoin d'authentification (par exemple, à chaque introduction d'une nouvelle cartouche dans une imprimante, à chaque mise sous tension de l'imprimante, à chaque sortie de mode veille, à chaque impression, etc.), le circuit 10 (figure 2) détermine si le circuit de rétention de charge 3 du circuit 22 se comporte d'une façon attendue, c'est-à-dire que son temps de décharge correspond à une durée attendue.

Le circuit 10 contient donc, dans sa mémoire 14, des informations relatives au comportement des circuits 3 des produits 2 authentiques. Par exemple, les circuits 22 sont soumis à une phase de test ou de caractérisation en fin de fabrication permettant de déterminer le profil de décharge de leurs circuits 3. Selon un autre exemple, les circuits 3 sont réalisés d'une façon suffisamment reproductible pour que qu'il soit possible de caractériser leur comportement temporel.

La figure 4 est un graphe illustrant le comportement d'un circuit 3 de rétention de charges d'un circuit 22 par application du procédé d'authentification.

On suppose que le circuit 10 provoque l'alimentation du circuit 22 et que, dans une étape d'initialisation de la mesure, il provoque la charge du circuit 3 jusqu'à un niveau représentant une tension V0 au noeud F du circuit 3 de rétention de charges.

Puis, à un instant T0, le circuit 3 coupe l'alimentation du circuit 22 pendant un temps qu'il choisit. Cette durée est une durée fixe ou, de préférence, une durée aléatoire.

A l'expiration de cette durée (instant T1 en figure 4), le circuit 10 rallume le circuit 22 et demande la mesure de la valeur de charges ou de tension résiduelle. Cette mesure fournit un niveau représentant une tension V1.

Le circuit 22 communique alors la valeur mesurée V1 au circuit 10 qui compare cette valeur à une valeur attendue. Cette valeur attendue est obtenue, par exemple, d'après une table stockée en mémoire du circuit 10. Dans le cas d'une coupure d'alimentation de durée aléatoire, le circuit 10 mesure cette durée pour extraire, de la caractéristique de la figure 4 stockée dans la mémoire du circuit 10, la valeur de la tension qui doit être fournie par le circuit 22.

En fonction de la durée (par exemple T1 ou Tn) pendant laquelle l'alimentation du circuit 22 est coupée, la mesure de la tension (par exemple V1 ou Vu) diffère. Ainsi, il est possible pour le circuit 10 de savoir au bout de combien de temps un niveau de tension (décroissant avec le temps) doit être atteint ou quelle valeur de tension est atteinte à l'issue d'une certaine durée.

Pour l'interprétation des mesures, le circuit 22 communique soit la valeur de tension V, soit le temps T correspondant, soit évalue lui-même une durée comme on le verra par la suite.

La réponse du circuit 3 de rétention de charges est propre à la puce de circuit intégrée formant le circuit 3, incluse dans le circuit 22. Par conséquent, cette réponse diffère d'une puce à l'autre (en fait d'une catégorie de puces à une autre). Une cartouche non authentique dont le circuit 22 aura été réalisé dans une technologie différente n'apportera donc pas la même réponse et ne sera pas authentifiée.

En fonction de la variabilité des réponses des circuits 3, par exemple liées aux tolérances de fabrication, on peut prévoir des seuils de mesure approximatifs tenant compte de ces tolérances. En variante, les caractéristiques des réponses des différents circuits sont communiquées aux dispositifs hôte avec un identifiant (code) de la série de produits.

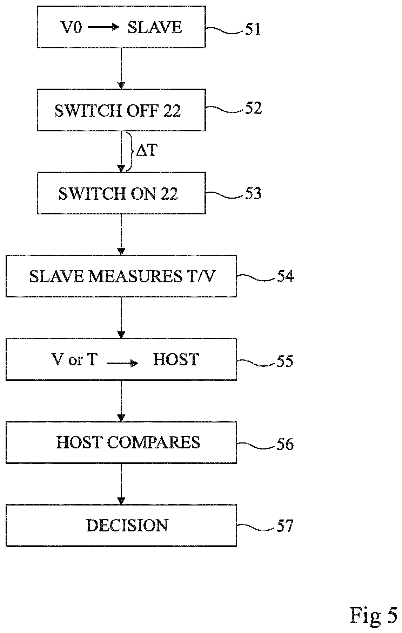

La figure 5 est un schéma bloc d'un mode de réalisation du procédé d'authentification.

Le circuit maître 10 ou hôte commence par communiquer la tension V0 au circuit esclave 22 (bloc 51, V0 -> SLAVE) . En variante, la tension V0 est mesurée par le circuit esclave lui-même à réception d'une commande provenant du circuit maître. Puis, le circuit 10 coupe l'alimentation du circuit esclave 22 (bloc 52, SWITCH OFF 22). Cette interruption de l'alimentation dure un intervalle de temps ΔT prédéterminé ou aléatoire. A l'issue de l'intervalle de temps ΔT, le circuit 10 réalimente le circuit 22 (bloc 23, SWITCH ON 22). Dès qu'il est réalimenté, le circuit 22 évalue (bloc 54, SLAVE MEASURES T/V) la valeur temporelle T ou de tension V correspondante, puis communique cette valeur au circuit 10 (bloc 55, V or T -> HOST). Enfin, le circuit 10 compare (bloc 56, HOST COMPARES) la valeur transmise par le circuit 22 à une valeur attendue, fonction de l'intervalle de temps ΔT.

La conversion entre les valeurs de tension et les valeurs temporelle est, par exemple, effectuée à l'aide d'une table de conversion stockée côté maître et/ou côté esclave.

L'authenticité n'est validée (bloc 57, DECISION) que si cette comparaison résulte en une identité des valeurs (ou une identité approximative selon les tolérances de mesure et dispersions technologiques de fabrication attendues).

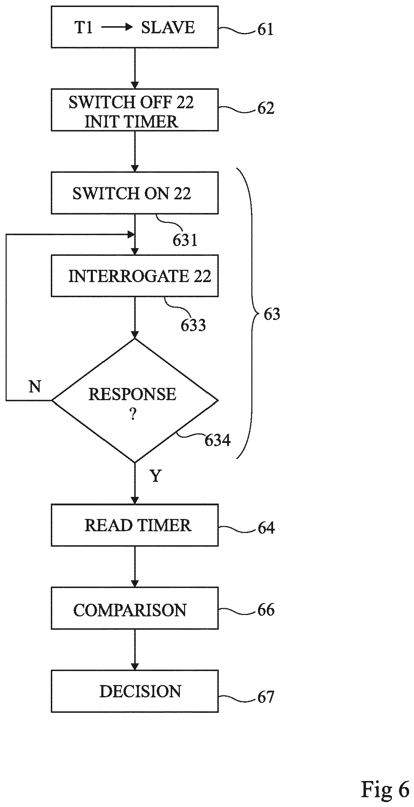

La figure 6 est un schéma bloc d'un autre mode de réalisation du procédé d'authentification.

Le circuit maître 10 ou hôte commence par communiquer une durée T1 au circuit esclave 22 (bloc 51, T1 -> SLAVE). Cette durée est stockée par le circuit 22 et représente une durée pendant laquelle il s'interdit de répondre à toute interrogation du circuit 10. Puis, le circuit 10 coupe l'alimentation du circuit 22 et initialise un compteur temporel qu'il contient (bloc 52, SWITCH OFF 22, INIT TIMER). Le circuit 10 interroge alors périodiquement (63) le circuit 22. Par exemple, il réalimente le circuit 22 (bloc 631, SWITCH ON 22) et envoie une requête (bloc 633, INTERROGATE 22). Tant que le circuit 22 ne répond pas (sortie N du bloc 634, RESPONSE ?), le circuit 10 continue à mesurer le temps qui s'écoule (reboucle sur le bloc 633). Dès que le circuit 22 répond (sortie Y du bloc 634), cela signifie que le circuit de rétention de charges du circuit 22 a atteint un niveau de charges représentant la durée T1. Le circuit 10 lit alors la valeur de son compteur temporel (bloc 64, READ TIMER), puis compare cette valeur à la valeur qu'il a initialement communiqué (bloc 61) au circuit 22 pour prendre une décision d'authenticité (bloc 67, DECISION) .

Dans le mode de réalisation de la figure 6, le circuit 22 n'a pas besoin de communiquer de données au circuit 10, ce qui est particulièrement adapté à des circuits 22 simples. Il suffit qu'il réponde par un accusé-réception à une requête d'interrogation pour permettre une décision d'authentification.

Selon une variante de réalisation, la durée T1 n'est pas communiquée par le circuit maître au circuit esclave, mais cette valeur ou une information représentative de cette valeur (valeur chiffrée ou cryptogramme) est transmise au circuit maître et au circuit esclave par un circuit tiers, le cas échéant distant, par exemple généré par un serveur de données avec lesquels les circuits 10 et 22 communiquent à distance.

Les échanges entre le dispositif hôte et la ou les produits peuvent être sécurisés de façon usuelle, par exemple avec un chiffrement symétrique ou asymétrique sur la base de clés contenues dans le produit 2 et dans le dispositif 1.

Divers modes de réalisation ont été décrits. Diverses modifications apparaîtront à l'homme de l'art. En particulier, le choix de la valeur des seuils d'authentification dépend de la tenue en tension des composants du transpondeur et peut varier d'une application à une autre. De plus, la mise en oeuvre pratique des modes de réalisation qui ont été décrits est à la portée de l'homme du métier en utilisant les indications fonctionnelles données ci-dessus et en utilisant des composants électroniques en eux-mêmes usuels.

## Revendications

1. Procédé de vérification de l'authenticité d'un produit (2) associé à un dispositif hôte (1), dans lequel :
un premier circuit électronique (10) du dispositif initialise un circuit (3) de rétention de charges d'un deuxième circuit électronique (22) du produit,
**caractérisé en ce que**: le premier circuit provoque la coupure de l'alimentation du deuxième circuit pour déclencher une évaluation de l'authenticité et interprète une durée de décharge du circuit de rétention de charges pour décider de l'authenticité du produit.

2. Procédé selon la revendication 1, dans lequel le premier circuit (10) compare une information représentative du temps, fournie par le circuit de rétention de charge (3) et la compare à une durée attendue.

3. Procédé selon la revendication 1 ou 2, dans lequel la durée de l'interruption de l'alimentation du deuxième circuit (22) est aléatoire.

4. Procédé selon l'une quelconque des revendications 1 à 3, dans lequel :
le premier circuit (10) communique (51) au deuxième circuit (22) une tension (V0) représentative d'un niveau de charges à stocker dans le circuit de rétention de charges (3) ;
le deuxième circuit charge le circuit de rétention de charges ;
le premier circuit coupe l'alimentation (52) du deuxième circuit pendant une certaine durée (ΔT) à l'issue de laquelle le deuxième circuit mesure (54) la quantité de charges résiduelle dans le circuit de rétention de charges ;
le deuxième circuit communique (55) une information représentative de cette quantité résiduelle au premier circuit ; et
le premier circuit compare (56) cette information à une valeur attendue.

5. Procédé selon l'une quelconque des revendications 1 à 3, dans lequel :
le deuxième circuit (22) reçoit une valeur temporelle (T1) pendant laquelle le deuxième circuit doit s'abstenir de répondre au premier circuit (10) ;
le deuxième circuit charge le circuit de rétention de charges (3) ;
le premier circuit coupe l'alimentation (62) du deuxième circuit et initialise un compteur temporel ;
le premier circuit rallume le deuxième circuit et l'interroge périodiquement jusqu'à ce qu'il réponde (63) ; et
dès que le deuxième circuit répond, le premier circuit compare (66) la durée écoulée à une durée attendue, fonction des caractéristiques du circuit de rétention de charge du deuxième circuit.

6. Procédé selon la revendication 5, dans lequel ladite valeur temporelle est communiquée au deuxième circuit (22) par le premier circuit (10).

7. Procédé selon la revendication 5, dans lequel ladite valeur temporelle est communiquée au premier circuit (10) et au deuxième circuit (22) par un troisième circuit.

8. Système comportant au moins un dispositif hôte (1) et au moins un produit (2) associé à ce dispositif hôte, adaptés au procédé selon l'une quelconque des revendications 1 à 7.

9. Système selon la revendication 8, dans lequel le dispositif est une imprimante et le produit est une cartouche d'encre.

## Patentansprüche

1. Verfahren zum Verifizieren bzw. Überprüfen der Authentizität eines Produkts (2), das mit einer Host-Vorrichtung (1) assoziiert ist, wobei:
eine erste elektronische Schaltung (10) der Vorrichtung eine Ladungshalteschaltung (3) einer zweiten elektronischen Schaltung (22) des Produkts initialisiert; **dadurch gekennzeichnet, dass**:
die erste Schaltung bewirkt, dass das Abschalten der Stromversorgung der zweiten Schaltung eine Überprüfung der Authentizität auslöst und eine Entladezeit der Ladungshalteschaltung interpretiert, um über die Authentizität des Produkts zu entscheiden.

2. Verfahren nach Anspruch 1, wobei die erste Schaltung (10) zeitrepräsentierende Informationen vergleicht, die von der Ladungshalteschaltung (3) geliefert werden, und diese mit einer erwarteten Dauer vergleicht.

3. Verfahren nach Anspruch 1 oder 2, wobei die Dauer, für die die Stromversorgung der zweiten Schaltung (22) gestoppt wird, zufällig ist.

4. Verfahren nach einem der Ansprüche 1 bis 3, wobei:
die erste Schaltung (10) an die zweite Schaltung (22) eine Spannung (V0) übermittelt (51), die für einen Ladezustand repräsentativ ist, der in der Ladungshalteschaltung (3) gespeichert werden soll;
die zweite Schaltung die Ladungshalteschaltung auflädt;
die erste Schaltung die Stromversorgung (52) der zweiten Schaltung für eine bestimmte Dauer (ΔT) abschaltet, an deren Ende die zweite Schaltung die Restmenge der Ladungen in der Ladungshalteschaltung misst (54);
die zweite Schaltung (55) Information, die für diese Restmenge repräsentativ ist, an die erste Schaltung übermittelt; und
die erste Schaltung die Information mit einem erwarteten Wert vergleicht (56).

5. Verfahren nach einem der Ansprüche 1 bis 3, wobei:
die zweite Schaltung (22) einen Zeitwert (T1) empfängt, während dem die zweite Schaltung auf die erste Schaltung (10) nicht reagieren sollte;
die zweite Schaltung die Ladungshalteschaltung (3) auflädt;
die erste Schaltung die Stromversorgung (62) der zweiten Schaltung abschaltet und einen Zeitzähler initialisiert;
die erste Schaltung die zweite Schaltung wieder einschaltet und sie periodisch abfragt, bis sie anspricht (63); und
sobald die zweite Schaltung anspricht, die erste Schaltung (66) die verstrichene Dauer mit einer erwarteten Dauer vergleicht, die eine Funktion der Eigenschaften der Ladungshalteschaltung der zweiten Schaltung ist.

6. Verfahren nach Anspruch 5, wobei der Zeitwert über die erste Schaltung (10) an die zweite Schaltung (22) übermittelt wird.

7. Verfahren nach Anspruch 5, wobei der Zeitwert über eine dritte Schaltung an die erste Schaltung (10) und an die zweite Schaltung (22) übermittelt wird.

8. System, das wenigstens eine Host-Vorrichtung (1) und wenigstens ein mit dieser Host-Vorrichtung assoziiertes Produkt (2) aufweist, das an das Verfahren nach einem der Ansprüche 1 bis 7 angepasst ist.

9. System nach Anspruch 8, wobei die Vorrichtung ein Drucker ist und das Produkt eine Tinten- oder Tonerpatrone ist.

## Claims

1. A method for verifying the authenticity of a product (2) associated with a host device (1), wherein:
a first electronic circuit (10) of the device initializes a charge retention circuit (3) of a second electronic circuit (22) of the product; **characterized in that**:
the first circuit causes the switching off of the power supply of the second circuit to trigger a verification of the authenticity and interprets a discharge time of the charge retention circuit to decide of the authenticity of the product.

2. The method of claim 1, wherein the first circuit (10) compares information representative of time, delivered by the charge retention circuit (3), and compares it with an expected duration.

3. The method of claim 1 or 2, wherein the duration for which the power supply of the second circuit (22) is stopped is random.

4. The method of any one of claims 1 to 3, wherein:
the first circuit (10) communicates (51) to the second circuit (22) a voltage (V0) representative of a charge level to be stored in the charge retention circuit (3);
the second circuit charges the charge retention circuit;
the first circuit switches off the power supply (52) of the second circuit for a certain duration (ΔT) at the end of which the second circuit measures (54) the residual quantity of charges in the charge retention circuit;
the second circuit (55) communicates information representative of this residual quantity to the first circuit; and
the first circuit compares (56) said information with an expected value.

5. The method of any one of claims 1 to 3, wherein:
the second circuit (22) receives a time value (T1) during which the second circuit should refrain from responding to the first circuit (10);
the second circuit charges the charge retention circuit (3) ;
the first circuit switches off the power supply (62) of the second circuit and initializes a time counter;
the first circuit switches back on the second circuit and periodically interrogates it until it responds (63); and
as soon as the second circuit responds, the first circuit compares (66) the elapsed duration with an expected duration, which is a function of the characteristics of the charge retention circuit of the second circuit.

6. The method of claim 5, wherein said time value is communicated to the second circuit (22) by the first circuit (10).

7. The method of claim 5, wherein said time value is communicated to the first circuit (10) and to the second circuit (22) by a third circuit.

8. A system comprising at least one host device (1) and at least one product (2) associated with this host device, adapted to the method of any one of claims 1 to 7.

9. The system of claim 8, wherein the device is a printer and the product is an ink cartridge.
